# EUROPEAN PATENT APPLICATION

(11) **EP 4 624 762 A1**
(43) Date of publication of application: **01.10.2025**
(21) Application number: 23892853.5
(22) Date of filing: 03.11.2023
(51) Int. Cl.: F15B 11/08

(54) **ELECTRICALLY-CONTROLLED HYDRAULIC ACTUATING SYSTEM OF AIRCRAFT**

(30) Priority: 27.11.2022 CN 202211496555
(71) Applicant: AVIC Harbin Aircraft Industry Group Co., Ltd, Harbin, Heilongjiang 150060 (CN)
(72) Inventor: ZHANG, Zhuoran, Harbin, Heilongjiang 150060 (CN); GU, Feng, Harbin, Heilongjiang 150060 (CN); LIU, Binbin, Harbin, Heilongjiang 150060 (CN); WANG, Hongzhi, Harbin, Heilongjiang 150060 (CN); SONG, Yannan, Harbin, Heilongjiang 150060 (CN); ZHU, Bo, Harbin, Heilongjiang 150060 (CN); CUI, Yuwei, Harbin, Heilongjiang 150060 (CN); LIN, Yuzhu, Harbin, Heilongjiang 150060 (CN)
(74) Representative: Osha BWB
(86) International application number: PCT/CN2023/000103
(87) International publication number: WO 2024/108739

(57) **Abstract**

An electrically-controlled hydraulic actuating system of an aircraft. A control unit is connected to a motor (1), and is used for controlling the starting and stopping, rotation direction and rotation speed of the motor (1); an output shaft of the motor (1) is connected to a driving shaft of a bidirectional quantitative gear pump (2), and the motor (1) is used for driving the bidirectional quantitative gear pump (2) to operate and controlling the operating direction; a port b of the bidirectional quantitative gear pump (2) is connected to a port 11a of a first hydraulic one-way valve (11) by means of a first pipeline; a port a of the bidirectional quantitative gear pump (2) is connected to a port 14a of a second hydraulic one-way valve (14) by means of a second pipeline; a common port 10c of a shuttle valve (10) separately communicates with a control port 11b of the first hydraulic one-way valve (11) and a control port 14b of the second hydraulic one-way valve (14); and a piston rod of an actuator (12) is used for driving a controlled apparatus to move. The system can effectively avoid the problem of large heat generation of closed systems and effectively reduce excessive starting currents of hydraulic pumps.

## Description

### TECHNICAL FIELD

The present disclosure relates to the aeronautical electromechanical technology, in particular to an electrically-controlled hydraulic actuation system of an aircraft.

### BACKGROUND

When an actuation system of an aircraft is subject to high loads, a hydraulic system may be used as the power source to drive the piston rod of a hydraulic cylinder to extend and retract, thereby achieving high-load actuation. Taking the typical opening and closing of a door as an example, an actuation system of the door is an actuation system in which hydraulic energy drives a linear actuator to perform reciprocating movement. A hydraulic actuation system of an aircraft is generally an open hydraulic system. That is, the hydraulic pump draws oil from a reservoir and delivers the pressurized oil into the system, while the returned oil from the actuator flows back to the reservoir. The operating fluid is cooled and settled in the reservoir before entering the next operating cycle. The direction and speed of the actuator are typically regulated with a throttle and speed control system, which includes a fixed-displacement pump, a relief valve, a throttle valve, a directional control valve and an actuator. The operating process includes: the pressurized oil generated by the fixed-displacement pump is controlled in its flow direction by changing the operating position of the directional control valve, so as to enter either the rod-side or rodless chamber of the actuator to enable extension and retraction of the piston rod. The flow rate into the actuator is regulated via the throttle valve to control speed, and the pressure of the system is regulated by the relief valve to protect the system.

A Hydraulic opening and closing means for a cargo door of an aircraft generally has the following functions:
(1) Automatic opening and closing of the cargo door. The hydraulic system may be activated via a cargo door control switch in the cockpit or at a ground station to enable the automatic opening and closing of the cargo door. Upon completion of the operation, the hydraulic energy system is automatically cut off or unloaded.
(2) Status indication of the cargo door. It indicates to the flight crew, ground crew, or pilots whether the cargo door is in an open, closed, or operating state.
(3) Fault protection function. The system is unloaded when the hydraulic energy is lost or the system is over-pressurized to protect the pump source. For a door with relatively low loads, manual operation may be available when the hydraulic energy is lost.

In a conventional hydraulic actuation system where a directional control valve is used to control the direction of movement of the actuator, internal leakage from the directional control valve often causes the system to be unable to properly change the flow direction of the oil, making it difficult to meet the system performance and reliability requirements. Moreover, the line between the hydraulic pump and the hydraulic valve in the conventional hydraulic actuation system also poses a great burden on the weight index of the aircraft.

### SUMMARY

Objectives of the present disclosure include:
(1) to realize the electrical control functionality of a hydraulic actuator of an aircraft or unmanned aerial vehicle;
(2) to alleviate the issue of high starting current of an electric pump;
(3) to effectively solve the problems of large volume, heavy weight, and high power loss caused by the throttle and speed control circuit in an open hydraulic system of conventional civil aircraft; and
(4) to use a distributed architecture, *i.e.,* an independent electrically-controlled hydraulic circuit that does not interconnect with other hydraulic subsystems on the aircraft, thereby enabling the implementation of an Electro-Hydrostatic Actuator (EHA). This aligns with the current design trend of more electric aircraft and improves the reliability of the aircraft.

### Technical solutions

In one or more embodiments, an electrically-controlled hydraulic actuation system of an aircraft includes: a control unit, a motor, a bidirectional fixed-displacement gear pump, an unloading solenoid valve, a shuttle valve, a first hydraulic check valve, a second hydraulic check valve, and an actuator.

The control unit is connected to the motor to control starting and stopping, a direction of rotation, and a rotational speed of the motor.

An output shaft of the motor is connected to a driving shaft of the bidirectional fixed-displacement gear pump. The motor is used to drive the operation of the bidirectional fixed-displacement gear pump and control an operating direction.

Port b of the bidirectional fixed-displacement gear pump is connected, via a first line, to port 8b of the unloading solenoid valve, port 10b of the shuttle valve, and port 11a of the first hydraulic check valve, respectively. Port 11c of the first hydraulic check valve is connected to port 12a of the actuator. Port a of the bidirectional fixed-displacement gear pump is connected, via a second line, to port 8a of the unloading solenoid valve, port 10a of the shuttle valve, and port 14a of the second hydraulic check valve, respectively. Port 14c of the second hydraulic check valve is connected to port 12b of the actuator.

A common port 10c of the shuttle valve is communicated with a control port 11b of the first hydraulic check valve and a control port 14b of the second hydraulic check valve, respectively.

A piston rod of the actuator is used to drive movement of a controlled device.

In one or more embodiments, the system further includes a first position sensor and a second position sensor.

The first position sensor and the second position sensor are disposed at two ends of a movement track of the controlled device. The first position sensor and the second position sensor are both connected to the control unit to detect whether the controlled device has reached a limit position. A limit-position signal is sent to the control unit when the controlled device has reached the limit position, and the control unit controls the motor to stop operating upon receiving the limit-position signal.

In one or more embodiments, the system further includes a first pressure regulation valve and a second pressure regulation valve. The first pressure regulation valve has an input end connected to the first line and an output end connected to the second line. The second pressure regulation valve has an input end connected to the first line and an output end connected to the second line.

The first/second pressure regulation valves are configured to open when oil pressures in the first/second lines exceed a prescribed pressure, so as to return over-pressurized oil to the first/second lines and maintain the oil pressures in the first/second lines at or below the prescribed pressure.

In one or more embodiments, the system further includes an oil replenishment circuit that includes a first check valve, a second check valve, a third check valve, and an accumulator.

Port c of the bidirectional fixed-displacement gear pump collects internal leakage from the gear pump and is connected to an input end of the first check valve, and the first check valve has an output end connected to the accumulator. The accumulator is also connected to input ends of the second and third check valves, and the second and third check valves have output ends connected to the first line and the second line, respectively.

The oil replenishment circuit is used to collect internal leakage from the bidirectional fixed-displacement gear pump and replenish oil to a low-pressure oil line of the system.

In one or more embodiments, the accumulator has an effective operating pressure lower than the prescribed pressure of the first/second pressure regulation valves.

In one or more embodiments, the system further includes two oil filters disposed at ports a and b of the bidirectional fixed-displacement gear pump, respectively.

In one or more embodiments, the system further includes a first pressure sensor and a second pressure sensor disposed in the first line and the second line, respectively, for monitoring the oil pressures in the first line and the second line.

In one or more embodiments, the controlled device is a door, a control surface, a flap, an aileron, or the like.

Furthermore, a door is used as the controlled device to explain its operating principle as follows.

The control unit controls the unloading solenoid valve to be energized upon receiving a signal to open the door. At this time, the port a as an oil suction port of the bidirectional fixed-displacement gear pump is communicated with the port b as an oil discharge port, thereby performing unloading. The control unit controls the motor to start and drive the bidirectional fixed-displacement gear pump to rotate forward. The unloading solenoid valve is de-energized after a duration of 1 s, and pressurized oil generated by the bidirectional fixed-displacement gear pump is discharged from the port b through the first hydraulic check valve into the port 12a of the actuator, so as to extend the piston rod of the actuator to enable the opening of the door. At the same time, the pressurized oil enters the shuttle valve, and the pressurized oil flows from the port 10c to the control port 11b of the first hydraulic check valve and the control port 14b of the second hydraulic check valve due to a higher pressure of the port 10b and the communication between the port 10b and the port 10c. The first and second hydraulic check valves are then opened, and the port 14c of the second hydraulic check valve is communicated with the port 14a, so that the returned oil from the actuator 12 is discharged from the port 12b through the ports 14c and 14a into the port a as an oil suction port of the bidirectional fixed-displacement gear pump. The first position sensor is triggered when the door is fully opened, and the control unit stops driving the motor upon receiving a signal from the first position sensor, thereby completing the opening of the door.

The control unit controls the unloading solenoid valve to be energized upon receiving a signal to close the door. At this time, the port b as an oil suction port of the bidirectional fixed-displacement gear pump is communicated with the port a as an oil discharge port, thereby performing unloading. The control unit controls the motor to start and drive the bidirectional fixed-displacement gear pump. The unloading solenoid valve is de-energized after a duration of 1 s, and the pressurized oil generated by the bidirectional fixed-displacement gear pump is discharged from the port a through the second hydraulic check valve into the port 12a of the actuator, so as to retract the piston rod of the actuator to enable the closing of the door. The pressurized oil enters the shuttle valve and flows from the port 10c to the control port 11b of the first hydraulic check valve and the control port 14b of the second hydraulic check valve due to a higher pressure of the port 10a and the communication between the port 10a and the port 10c. The first and second hydraulic check valves are then opened, and the port 11c is communicated with the port 11a, so that the returned oil from the actuator is discharged from the port 12a through the ports 11c and 11a into the port b as an oil suction port of the bidirectional fixed-displacement gear pump. The second position sensor is triggered when the door is fully closed, and the control unit stops driving the motor upon receiving a signal from the second position sensor, thereby completing the closing of the door.

In one or more embodiments, the control unit controls the unloading solenoid valve to be energized when an opening signal or a closing signal is stopped being sent to the control unit during the movement of the door, equalizing pressures at the ports 10a and 10b of the shuttle valve, so that no pressurized oil flows into the control ports of the first and second hydraulic check valves. The first and second hydraulic check valves are not opened, so that the oil in a rod-side chamber of the actuator is isolated from that in a rodless chamber of the actuator, thereby fixing the position of the piston rod of the actuator to achieve the position-holding functionality.

In one or more embodiments, the control unit controls the motor to stop operating and controls the unloading solenoid valve to be energized when the first and second position sensors do not receive the limit-position signal within a specified time. At this time, the port a and the port b of the bidirectional fixed-displacement gear pump are communicated to avoid damage to the motor due to excessive pressure or prolonged loading.

The specified time is greater than the theoretical movement duration of the controlled device.

### Advantages of the present disclosure

(1) A closed hydraulic system is used, in which the oil return port of the actuator is directly connected to the oil suction port of the hydraulic pump. This eliminates the need for a large-volume reservoir which is required in an open system for oil storage and heat dissipation, thereby saving space and weight. Furthermore, since the actuation system of a cargo door does not operate continuously during a single flight mission and each operation lasts less than 1 minute, the issue of excessive heat generation typically associated with the closed system is effectively avoided.
(2) A bidirectional hydraulic pump is used and a directional control valve is eliminated, which can effectively reduce the weight of the system.
(3) A bidirectional fixed-displacement gear pump is used, which offers a superior power-to-weight ratio compared with an axial piston pump. Furthermore, it can avoid the issue of weight gain of the system caused by the current trend of blindly replacing throttle and speed control circuits with volume control circuits based on axial constant-pressure variable displacement pumps to improve system efficiency and reduce system heat generation.
(4) It supports position-holding functionality, that is, the actuator may be stopped at any position within the motion envelope.
(5) It supports unloading functionality. When the bidirectional hydraulic pump is started, the loads at the inlet and outlet of the hydraulic pump are balanced, and the oil discharge port and the oil suction port of the pump are communicated in the event of a system fault to protect the motor and the hydraulic pump. Furthermore, when the hydraulic pump is started, the oil suction port and the oil discharge port of the hydraulic pump are communicated to allow no-load startup of the hydraulic pump, effectively alleviating the problem that the starting current of the hydraulic pump is too large and easily exceeds the electrical load capacity of the aircraft.
(6) It is completely isolated from the main hydraulic system or other hydraulic systems with a high risk level of the aircraft. In the event of a system fault, the aircraft is allowed to continue its flight mission after the cargo door is closed, thus ensuring both safety and economic viability for civil aircrafts.
(7) The entire system is implemented in the form of an electro-hydrostatic actuator, aligning with the current design trend of distributed hydraulic actuation systems for aircrafts.

### BRIEF DESCRIPTION OF DRAWINGS

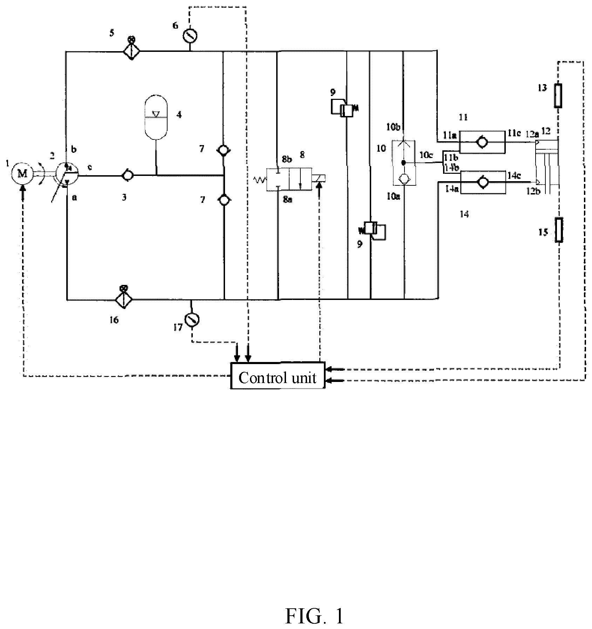

FIG. 1 is a schematic diagram of the principle of an electrically-controlled hydraulic actuation system of an aircraft.

### DETAILED DESCRIPTION

As shown in FIG. 1, an electrically-controlled hydraulic actuation system of an aircraft includes a control unit, a motor 1, a bidirectional fixed-displacement gear pump 2, a case drain check valve 3, an accumulator 4, an oil filter 5, a pressure sensor 6, check valves 7, an unloading solenoid valve 8, pressure regulation valves 9, a shuttle valve 10, a hydraulic check valve 11, an actuator 12, a position sensor 13, a hydraulic check valve 14, a position sensor 15, an oil filter 16, and a pressure sensor 17. An output shaft of the motor 1 is mechanically connected to a driving shaft of the bidirectional fixed-displacement gear pump 2. Port b of the gear pump 2 is connected to the oil filter 5, the sensor 6, port 8b of the unloading solenoid valve 8, the pressure regulation valves 9, port 10b of the shuttle valve 10, the hydraulic check valve 11, and port 12a of the actuator 12. Port a of the gear pump 2 is connected to the oil filter 16, the sensor 17, port 8a of the unloading solenoid valve 8, the pressure regulation valves 9, port 10a of the shuttle valve 10, the hydraulic check valve 14, and port 12b of the actuator 12. A case drain port c of the gear pump 2 is connected to the case drain check valve 3, the accumulator 4, and the check valves 7. Furthermore, the oil in the accumulator 4 only flows to the oil suction port of the gear pump 2. The control unit may receive a control signal to control the operation of the motor 1 and the unloading solenoid valve 8, and may also receive pressure signals from the pressure sensor 6 and the pressure sensor 17 and position signals from the position sensor 13 and the position sensor 15. A piston rod of the actuator is used to drive a controlled device to operate.

The controlled device may be a door, a control surface, or the like. A door is used as the controlled device to explain its operating principle as follows.

The control unit controls the unloading solenoid valve 8 to be energized upon receiving a signal to open the door. Then the port a as an oil suction port of the bidirectional fixed-displacement gear pump 2 is communicated with the port b as an oil discharge port, thereby performing unloading. The control unit controls the motor 1 to start and drive the bidirectional fixed-displacement gear pump 2.

The unloading solenoid valve 8 is de-energized after a duration of 1 s, and pressurized oil generated by the bidirectional fixed-displacement gear pump 2 is discharged from the port b through the oil filter 5 and the hydraulic check valve 11 into the port 12a of the actuator 12, so as to extend the piston rod of the actuator 12 to enable the opening of the door.

At the same time, the pressurized oil enters the shuttle valve 10. Then the pressurized oil flows from port 10c to a control port 11b of the hydraulic check valve 11 and a control port 14b of the hydraulic check valve 14 due to a higher pressure of the port 10b and communication between the port 10b and the port 10c. Then the hydraulic check valves 11, 14 are opened, and the port 14c is communicated with the port 14a, so that the returned oil from the actuator 12 is discharged from the port 12b through the ports 14c, 14a and the oil filter 16 into the port a as an oil suction port of the bidirectional fixed-displacement gear pump 2.

The first position sensor 15 is triggered when the door is fully opened, and the control unit stops driving the motor 1 upon receiving a signal from the position sensor 15, thereby completing the opening of the door.

The control unit controls the unloading solenoid valve 8 to be energized upon receiving a signal to close the door. Then the port b as an oil suction port of the bidirectional fixed-displacement gear pump 2 is communicated with the port a as an oil discharge port and performs unloading. The control unit controls the motor 1 to start and drive the bidirectional fixed-displacement gear pump 2.

The unloading solenoid valve 8 is de-energized after a duration of 1 s, and the pressurized oil generated by the bidirectional fixed-displacement gear pump 2 is discharged from the port a through the oil filter 16 and the hydraulic check valve 14 into the port 12b of the actuator 12, so as to retract the piston rod of the actuator 12 to enable the closing of the door.

At the same time, the pressurized oil enters the shuttle valve 10. Then the pressurized oil flows from the port 10c to the control port 11b of the hydraulic check valve 11 and the control port 14b of the hydraulic check valve 14 due to a higher pressure of the port 10a and the communication between the port 10a and the port 10c. Then the hydraulic check valves 14, 11 are opened, and the port 11c is communicated with the port 11a, so that the returned oil from the actuator 12 is discharged from the port 12a through the ports 11c, 11a and the oil filter 5 into the port b as an oil suction port of the bidirectional fixed-displacement gear pump 2.

The first position sensor 13 is triggered when the door is fully closed. The control unit stops driving the motor 1 upon receiving a signal from the position sensor 13, thereby completing the closing of the door.

During the opening and closing of the door, the pressure sensors 6, 17 respectively indicate the pressure of the pressurized line, indicating that the system is in the operating state. Furthermore, the pressure of the pressurized line is regulated by the two pressure regulation valves 9 to not exceed the design limit.

Due to the use of the bidirectional fixed-displacement gear pump 2, the internal leakage enters the oil replenishment circuit of the accumulator 4 via the case drain check valve 3. During the operation of the system, the effective operating pressure of the accumulator 4 is set to be lower than the prescribed pressure of the pressure regulation valves 9. The accumulator 4 mainly replenishes oil to the oil line and provides a certain oil suction pressure for the oil suction port of the bidirectional fixed-displacement gear pump 2 to prevent cavitation in the pump. Furthermore, two check valves 7 are used to control the flow direction of the pressurized oil in the oil replenishment circuit, so that the pressurized oil only flows into the oil suction port of the pump.

The control unit controls the unloading solenoid valve 8 to be energized when an opening signal or a closing signal is stopped being sent to the control unit during the movement of the door, equalizing the pressures at the ports 10a and 10b of the shuttle valve 10 so that no pressurized oil flows into the control ports of the hydraulic check valves 11, 14. The hydraulic check valves are not opened, and the oil in a rod-side chamber of the actuator 12 is isolated from that in a rodless chamber of the actuator 12, thereby fixing the position of the piston rod of the actuator 12 to achieve a position-holding function.

In the event of a system fault, that is, if the control unit does not receive a limit-position signal of the door from the position sensors 13 and 15 within a specified time, and the pressure sensor 6 or 17 of the pressurized line has a pressure signal, the control unit controls the motor 1 to stop operating and controls the unloading solenoid valve 8 to be energized. Then the oil suction port and the oil discharge port of the bidirectional fixed-displacement gear pump are communicated. This can effectively avoid damaging the hydraulic pump and the motor due to excessive pressure or prolonged loading. The specified time is the theoretical time for the opening and closing of the door plus a waiting duration of a certain length, such as a waiting duration of two seconds.

## Claims

1. An electrically-controlled hydraulic actuation system of an aircraft, comprising: a control unit, a motor, a bidirectional fixed-displacement gear pump, an unloading solenoid valve, a shuttle valve, a first hydraulic check valve, a second hydraulic check valve, and an actuator, wherein
the control unit is connected to the motor to control starting and stopping, a direction of rotation, and a rotational speed of the motor,
an output shaft of the motor is connected to a driving shaft of the bidirectional fixed-displacement gear pump, and the motor is used to drive operation of the bidirectional fixed-displacement gear pump and control an operating direction,
port b of the bidirectional fixed-displacement gear pump is connected, via a first line, to port 8b of the unloading solenoid valve, port 10b of the shuttle valve, and port 11a of the first hydraulic check valve, respectively; port 11c of the first hydraulic check valve is connected to port 12a of the actuator; port a of the bidirectional fixed-displacement gear pump is connected, via a second line, to port 8a of the unloading solenoid valve, port 10a of the shuttle valve, and port 14a of the second hydraulic check valve, respectively; port 14c of the second hydraulic check valve is connected to port 12b of the actuator,
a common port 10c of the shuttle valve is communicated with a control port 11b of the first hydraulic check valve and a control port 14b of the second hydraulic check valve, respectively, and
a piston rod of the actuator is used to drive movement of a controlled device.

2. The system according to claim 1, wherein
the system further comprises a first position sensor and a second position sensor,
the first position sensor and the second position sensor are disposed at two ends of a movement track of the controlled device,
the first position sensor and the second position sensor are both connected to the control unit to detect whether the controlled device has reached a limit position, and
a limit-position signal is sent to the control unit when the controlled device has reached the limit position, and the control unit controls the motor to stop operating upon receiving the limit-position signal.

3. The system according to claim 2, wherein
the system further comprises a first pressure regulation valve and a second pressure regulation valve,
the first pressure regulation valve has an input end connected to the first line and an output end connected to the second line,
the second pressure regulation valve has an input end connected to the first line and an output end connected to the second line, and
the first/second pressure regulation valves are configured to open when oil pressures in the first/second lines exceed a prescribed pressure, so as to return over-pressurized oil to the first/second lines and maintain the oil pressures in the first/second lines at or below the prescribed pressure.

4. The system according to claim 3, wherein
the system further comprises an oil replenishment circuit,
the oil replenishment circuit comprises a first check valve, a second check valve, a third check valve, and an accumulator,
port c of the bidirectional fixed-displacement gear pump collects oil leakage inside the gear pump and is connected to an input end of the first check valve, and the first check valve has an output end connected to the accumulator,
the accumulator is further connected to input ends of the second and third check valves, and the second and third check valves have output ends connected to the first line and the second line, respectively, and
the oil replenishment circuit is used to collect internal leakage from the bidirectional fixed-displacement gear pump and replenish oil in a low-pressure oil line of the system.

5. The system according to claim 4, wherein the accumulator has an effective operating pressure lower than the prescribed pressure of the first/second pressure regulation valves.

6. The system according to claim 5, wherein the system further comprises two oil filters that are disposed at ports a and b of the bidirectional fixed-displacement gear pump, respectively.

7. The system according to claim 6, wherein the system further comprises a first pressure sensor and a second pressure sensor disposed in the first line and the second line, respectively, for monitoring the oil pressures in the first line and the second line.

8. The system according to claim 7, wherein
the controlled equipment is a door,
the control unit controls the unloading solenoid valve to be energized upon receiving a signal to open the door, then the port a as an oil suction port of the bidirectional fixed-displacement gear pump is communicated with the port b as an oil discharge port, thereby performing unloading, and the control unit controls the motor to start and drive the bidirectional fixed-displacement gear pump to rotate forward,
the unloading solenoid valve is de-energized after a duration of 1 s, and pressurized oil generated by the bidirectional fixed-displacement gear pump is discharged from the port b through the first hydraulic check valve into the port 12a of the actuator, so as to extend the piston rod of the actuator to enable opening of the door,
the pressurized oil enters the shuttle valve, and the pressurized oil flows from the port 10c to the control port 11b of the first hydraulic check valve and the control port 14b of the second hydraulic check valve due to a higher pressure of the port 10b and communication between the port 10b and the port 10c, then the first and second hydraulic check valves are opened, and the port 14c of the second hydraulic check valve is connected to the port 14a, so that a returned oil from the actuator 12 is discharged from the port 12b through the ports 14c and 14a into the port a as an oil suction port of the bidirectional fixed-displacement gear pump,
the first position sensor is triggered when the door is fully opened, and the control unit stops driving the motor upon receiving a signal from the first position sensor, thereby completing the opening of the door,
the control unit controls the unloading solenoid valve to be energized upon receiving a signal to close the door, then the port b as an oil suction port of the bidirectional fixed-displacement gear pump is communicated with the port a as an oil discharge port, thereby performing unloading, and the control unit controls the motor to start and drive the bidirectional fixed-displacement gear pump,
the unloading solenoid valve is de-energized after a duration of 1 s, and the pressurized oil generated by the bidirectional fixed-displacement gear pump is discharged from the port a through the second hydraulic check valve into the port 12a of the actuator, so as to retract the piston rod of the actuator to enable closing of the door,
the pressurized oil enters the shuttle valve, and the pressurized oil flows from the port 10c to the control port 11b of the first hydraulic check valve and the control port 14b of the second hydraulic check valve due to a higher pressure of the port 10a and communication between the port 10a and the port 10c, then the first and second hydraulic check valves are opened, and the port 11c is communicated with the port 11a, so that the returned oil from the actuator 12 is discharged from the port 12a through the ports 11c and 11a into port b as an oil suction port of the bidirectional fixed-displacement gear pump, and
the second position sensor is triggered when the door is fully closed, and the control unit stops driving the motor upon receiving a signal from the second position sensor, thereby completing the closing of the door.

9. The system according to claim 8, wherein
the control unit controls the unloading solenoid valve to be energized when an opening signal or a closing signal is stopped being sent to the control unit during movement of the door, equalizing pressures at the ports 10a and 10b of the shuttle valve so that no pressurized oil flows into the control ports of the first and second hydraulic check valves, and
the first and second hydraulic check valves are not opened, the oil in a rod-side chamber of the actuator is isolated from the oil in a rodless chamber of the actuator, thereby fixing a position of the piston rod of the actuator to achieve a position-holding function.

10. The system according to claim 9, wherein
the control unit controls the motor to stop operating and controls the unloading solenoid valve to be energized when the first and second position sensors do not receive the limit-position signal within a specified time, then the port a and the port b of the bidirectional fixed-displacement gear pump are communicated to avoid damage to the motor due to excessive pressure or prolonged loading, and
the specified time is greater than a theoretical movement duration of the controlled device.
